# EUROPEAN PATENT SPECIFICATION

(11) **EP 2 770 385 B1**
(45) Date of publication and mention of the grant of the patent: **01.02.2017**
(21) Application number: 13156370.2
(22) Date of filing: 22.02.2013
(51) Int. Cl.: G05B 19/042, E05F 11/06, E05F 15/70, E05F 17/00

(54) **Method for enabling a synchronous movement of actuators of a closing system**
Verfahren zum Ermöglichen einer synchronen Bewegung von Aktuatoren eines Verschlusssystems
Procédé permettant un mouvement synchrone d'actionneurs d'un système de fermeture

(43) Date of publication of application: 27.08.2014
(73) Proprietor: Nekos Srl, 36064 Mason Vicentino (VI) (IT)
(72) Inventor: Galliazzo, Giuliano, 36042 Breganze (VI) (IT); Stefani, Matteo, 36015 Schio (VI) (IT); Trevisan, Tiziano, 36100 Vicenza (IT)
(74) Representative: DREISS Patentanwälte PartG mbB

(56) References cited:
- EP-A1- 1 764 663
- WO-A1-98/37297
- JP-A- H03 244 954
- US-A- 5 499 510
- US-A1- 2002 126 020
- US-B2- 7 869 918

## Description

### Specification

The present invention refers to a method for enabling a synchronous movement of at least two actuators of a closing system. The closing system may be provided for moving, in particular for opening and/or closing, movable elements such as doors, windows or the like. In particular, the actuators of the closing system are embodied as so-called linear actuators comprising a spindle or a toothed bar or as chain actuators, for example like those disclosed in EP 1 723 303 A1 and EP 2 141 316 A1. The method comprises the following steps:
Providing the actuators each with the unique address, and during a subsequent intended use of the closing system:
   - exchanging information among the actuators via a data communication medium interconnecting the actuators with one another, the information regarding the current individual positions of the actuators during their operation as part of the intended use, and
   - processing the information, determining corrections values for at least one of the actuators and applying the at least one actuator with the correction values, in order to make the actuators move synchronously.

A method of this kind is disclosed, for example, in EP 1 764 663 A1. The method described therein, is realized in a closing system, were one of the actuators has been defined as a master and where the other actuators are slaves. Synchronisation of the movement of the actuators of the closing system is controlled by the master actuator. Hence,the slave actuators can only be synchronised if triggered or arranged for by the master actuator. The actuators of the closing system known from EP 1 764 663 A1 are not independent from one another and cannot work and perform the synchronisation autonomously. Due to a restricted data transmission rate of the data communication medium interconnecting the actuators and due to the excessive exchange of information among the actuators as part of the master-slave-synchronisation-process described in EP 1 764 663 A1 only a very reduced number of actuators can be synchronised. The excessive exchange of information among the actuators via the data communication medium comprises the transmission of information regarding the current status and position of a first slave actuator to the master actuator, the transmission of information regarding the current individual status and position of the master actuator to the slave actuator and finally the transmission of control data from the master actuator to the slave actuator for controlling its position. Between each of the data transmissions, there is a pause for allowing the receiving actuator to store and process the received information and for allowing the master actuator to process the information and generate the control signals. This data transmission process has to be performed for all actuators making part of the closing system. Hence, the duration of a communication cycle in the closing system described in EP 1 764 663 A1 is rather long, or the number of actuators, which can be synchronised in respect to one another, is restricted. Practically, the number of actuators, the movement of which can be synchronised, is limited to two actuators.

Finally, the actuators of the closing system of EP 1 764 663 A1 each are assigned a unique identifier, for example, consisting of their serial number, before their intended use. The intended use of the actuators corresponds to their aktivation in order to open or close a movable element, for example a door or a window. The unique identifier is stored in a memory of the actuators and can be accessed and used for the exchange of information among the actuators via the data communication medium during the intended use of the closing system. Hence, the information exchanged among the actuators via the data communication medium comprises apart from the current individual status and position of the actuators also their unique identifiers. This kind of addressing of the actuators makes it necessary to provide for unique identifiers and to store these identifiers in the memory of the actuators prior to the intended use of the closing system, for example at the end of a production line of the actuator. Further, care must be taken that there are no two actuators having identical identifiers because otherwise the synchronisation of the actuators would not work properly. Furthermore, before the intended use of the closing system, a user has to make up a clear and precise plan of the intended closing system, in particular of the number of actuators to be used and their unique identifiers. Therefore, one or more actuators of an existing closing system cannot simply be replaced by other actuators with different identifiers, additional actuators with new identifiers cannot simply be added and existing actuators with known identifiers cannot simply be deleted from the closing system. Rather, in these cases the plan of the closing system, in particular the number of the actuators used and their unique identifiers, would have to be made up anew. Hence, the method known from EP 1 764 663 A1 is not very flexible in respect to replacing, adding and deleting actuators from the existing closing system.

Document WO 98/37297 A1 discloses an operating system for electrically operated devices such as doors or windows, comprising several program controlled drive units with motion transfer members connected with the operated device and means for synchronization of the drive units such that they can jointly operate the device. The drive units are designed as self-contained, autonomous units in connection with a mutual communication line and the motor control circuit in each drive unit comprises a microprocessor with an associated memory for storage of identification information, which is transmitted to the mutual communication line together with synchronizing data representing the current position of the motion transfer member of the drive unit. Analogously to EP 1 764 663 A1, said identification information consists of a serial number assigned during the production of the drive unit.

Document US 7 869 918 B2 discloses a method of identifying nodes in a computer network in a motor vehicle air conditioning installation, wherein the address of the components is assigned based on the measurement of the current passing through each component. Therefore, it is an object of the present invention to provide for a more flexible and easy to use method for enabling a synchronous movement of actuators of a closing system.

For solving this problem, the present invention suggests a method for enabling a synchronous movement of at least two actuators of a closing system according to the preamble of claim 1, which is characterized by the actuators of the closing system automatically and autonomously assigning themselves their unique addresses during an initialization procedure executed at least once before the intended use of the closing system according to the characterizing portion of claim 1. The initialization procedure takes about 1 to 3 seconds.

An important aspect of the present invention is the fact that the actuators are fully autonomous and automatically assign unique addresses to themselves and automatically communicate their individual addresses to the other actuators making part of the closing system. Hence, it is possible for a user to simply locate a desired number of actuators connected to at least one movable element and to interconnect the actuators by means of a data communication medium for enabling an information exchange among the actuators. Further, the actuators simply have to be connected to an electrical power supply in order to ensure their functioning. Depending on the electrical properties of the actuators, the power supply can provide an alternated current (AC) or voltage or a direct current (DC) or voltage. The electrical voltage can be in the range of 110 V to 230 V or any value below that, for example in the range of 12 V to 24 V.

Apart from these basic measures for locating the actuators, connecting them to a power supply, and interconnecting the actuators with the data communication medium, no further activities are required by the user. It is not necessary to manually provide the actuators with unique identifiers, to determine the number of actuators making part of the closing system and their respective identifiers. In particular, no precise plan of the actuators to be used and/or their individual addresses has to be provided. Rather, the actuators used in the closing system automatically and autonomously assign themselves their unique addresses.

According to the present invention, the actuators automatically and autonomously assign themselves their unique addresses during an initialization procedure executed at least once before the intended use of the closing system. The actuators can be switched into an initialization mode, in order to perform the initialization procedure upon power-up, simply by activating a switch, in particular a dip switch, making part of each of the actuators of the closing system. The mode of each of the actuators can be switch between the initilization mode and a conventional or regular opertion mode in which the actuators are operated in order to achieve the closing system's intended use. Depending on the actuators' mode they are powered-up in the initilization mode or in the conventional opertion mode. The automtic and autonomous assignment of unique addresses is only performed for those actuators which are switched into the initialization mode. After the end of the initialization procedure the switches of the actuators are activated in order to switch the actuators into the conventional operation mode.

The initialization procedure can be performed each time the closing system is powered up. However, preferably, the initialization procedure is performed only once after having located the desired number of actuators, after having provided them with an electrical power supply and after having interconnected them with the data communication medium, in order to set-up the closing system. The set-up parameters can be stored in appropriate memory devices in the actuators and/or the closing system and have to be re-ascertained only in case the closing system's configuration changes, for example by replacing, adding or removing one or more actuators, or if the stored set-up data gets lost for one reason or the other.

There are various possibilities how the actuators can automatically and autonomously assign themselves their unique addresses during the initialization procedure. For example, a random number generator can generate different random numbers, which with a very high probability are unique numbers and which can be assigned to the actuators as their unique addresses. Furthermore, it is possible that the random numbers are not directly assigned to the actuators as unique addresses but that they are indicative for the unique addresses. For example, the lowest random number is assigned the unique address "0", the next higher random number is assigned the unique address "1" and so on.

The unique addresses are assigned to the actuators by
a) starting at least one timer at the beginning of the initialization procedure,
b) when the first actuator of the closing system is provided with an electrical current, determining the current timer count and assigning the current timer count to the first actuator,
c) when a further actuator is provided with an electrical current, determining the current timer count and assigning the current timer count to the further actuator, and
d) repeating step c) until all actuators of the closing system, or all actuators which have been switched to the initialization mode, respectively, have been assigned a current timer count.

It is possible that the closing system is provided with one common timer for all actuators. However, it is preferable that each actuator is provided with its own timer. The timer acts as some kind of random number generator. It can provide a random number, for example, in the range of 1 ... 10⁶. The timer of an actuator automatically starts running, that is counting upwards or downwards, the moment an electrical current applied to it is high enough to make the timer work. No timer-reset is necessary because the timer count is supposed to be a random number anyway.

When the closing system is powered-up, that is the electrical energy for supplying the actuators is turned on, due to different signal propagation times the electrical current does not reach the various actuators of the closing system at the same time. Rather, the actuators are subsequentaly supplied with electrical current one after the other. Furthermore, due to diverging hardware properties within the actuators the current applied to the actuators can take differently long in order to actually power-up the actuator and make it work properly. After power-up of an actuator first the timer is ready to run and starts running and then the actuator's processor is ready for executing the computer program. By doing so the current timer count is determined and assigned to the actuator.

Powering-up an actuator comprises applying the current to a processor and to other components of the actuator, booting the processor and performing a set-up, loading a computer program to be exectuted into the processor memory, and starting the execution of the program. If the actuator is in the initialization mode, the computer program loaded into the memory is one to perform the initialization procedure. If the actuator is in another mode, for example in the regular operational mode, another computer program may be loaded into the processor memory for making the actuator work according to the closing system's intended use. Alternatively, irrespective of the actuator's mode the same computer program may be loaded into the processor memory and depending on the actuator's mode different parts of the programm may be executed.

The first actuator of the closing system is considered to be provided with an electrical energy as soon as its start up procedure has finished. Usually, this is the case after the microprocessor has been booted and a computer program has been loaded into the processor. The computer program provides for a proper functioning and co-operation of the electronic components making part of the actuator, including the microprocessor. During the set-up procedure the microprocessor's input and output ports, which are connected to at least one sensor and the actuator's electric motor, are set and adjusted. Furthermore, during the start-up procedure various electronic components, arrangements and appliances of the actuator are set and adjusted in order to provide for their proper functioning during the subsequent intended use, like a timer, analog/digital converters, and the like.

The initialization procedure, in particular the assignment of the current timer count to the actuators, is realized by a software computer program to be executed on the actuators' microprocessors. During start-up of the closing system and the sequential powering up of the actuators, it is obvious, that in each of the actuators the timer is started first before the microprocessor is booted and the software for realizing the initialization procedure is executed. Of course, the electrical energy is turned on for all actuators at the same time. However, due to different signal propagation times from the power supply unit to the various actuators and due to the electric properties of the various actuators, the actuators do not reach their powered up condition ready for executing the software for realizing the initialization procedure at the same time.

The first actuator to be provided with an electrical current, that is the first actuator to have concluded its power-up procedure, is assigned the current timer count of its timer. This current timer count can correspond to the first actuator's unique address or can serve as a basis for determining the unique address. Then, the next actuator to be provided with an electrical current, that is the next actuator to have concluded its power-up procedure, is assigned the current timer count of its timer. This current timer count can correspond to the next actuator's unique address or can serve as a basis for determining the unique address. This goes on until all actuators have been assigned the current timer count of their timers.

Thereafter, the overall number of actuators of the closing system is determined, and it is checked whether each of the actuators has been assigned a unique address. It is possible that the current timer counts of the actuators' timers are directly taken as the actuators' unique addresses. Alternatively, it is possible to determine unique addresses for the actuators depending on the current timer counts assigned to the actuators. In that case the actuator with the lowest (or highest) timer count assigned to it, is assigned the lowest (or highest) unique address, for example "0" or "1". Then, the actuator with the next higher (or lower) timer count assigned to it, is assigned the next higher (or lower) unique address, for example "1" or "2". This goes on until all actuators have been assigned appropriate unique addresses. For example, with a total of eight actuators, the unique actuator addresses will run from "0" or "1" to "7" or "8". Of course, the number of actuators can vary; in particular, the closing system can comprise more than eight actuators.

The described embodiment has the advantage that the number of bits necessary for storing the unique address in the actuators' memories can be reduced. For example, in a closing system comprising eight separate actuators the unique addresses could run from "0" to "7". In that case three bits (2³=8) would be sufficient in order to store all possible addresses in the actuators' memories. In contrast thereto, if the timer runs from 0 to 10⁶, the current timer count could be within this range, too. In order to store the current timer counts in the actuators' memories 20 bits (2²⁰=1.048.576) would be required.

The possibility that the current timer count of the first actuator's timer is identical to one of the other current counts of the other actuators' timers is very remote. When all actuators of the closing system have acquired their unique addresses, the actuators exchange their addresses via the data communication medium, determine the overall number of actuators within the closing system and check, whether the very remote case has occurred that two or more actuators have identical addresses. In that case the initialization procedure for automatically and autonomously assigning unique addresses to the actuators is executed once more before the intended use of the closing system. Only if all actuators have been assigned unique addresses, the initialization procedure is terminated.

During the initialization procedure, in particular during the determination of the unique addresses assigned to the various actuators, the first actuator occupies the data communication medium for the transmittal of at least one data-symbol containing at least its unique address. For example, with a symbol rate of 9.600 Baud (Bd), the transmittal of the symbol will take approximately 1 ms (=1/9.600 Bd). The data symbol to be transmitted may consist of one or more bits, in particular of four or eight bits. Of course, it would be possible that the first actuator occupies the data communication medium for the transmission of more than one symbol, too.

After the transmittal of at least one symbol by the first actuator, the first actuator listens to the data communication medium for a predetermined period of time, in order to determine whether the closing system comprises any other actuators. In that predetermined period of time the second actuator would occupy the data communication medium and transmit at least one symbol containing its unique address. Thereafter, the third actuator would occupy the data communication medium and transmit its data symbol containing its unique address and so on until all actuators have transmitted their data symbols containing their unique addresses to the other actuators via the data communication medium. When one of the actuators transmits its data symbol to the other actuators via the data communication medium, all other actuators are listening to the data communication medium. By doing so all actuators receive address information from all actuators of the closing system.

By making the actuators transmit the at least one data symbol containing the unique addresses which were assigned to them, the actuator listening to the data communication medium will receive information regarding the overall number of actuators in the closing system and their respective unique addresses. The time period, during which the actuators each listen to the data communication medium, is determined such that a certain number of actuators, in particular all actuators of the closing system would theoretically have the opportunity to send at least one symbol each connected to the actuator's unique address across the data communication medium. For example, in a closing system comprising a maximum of eight actuators, the predetermined time period is long enough for receiving by the listening actuator the at least one data symbol transmitted by the seven other actuators. In particular the predetermined time period is approximately 100 ms.

The information regarding the overall number of actuators in the closing system and their unique addresses is stored in the listening actuators' memories.

Now the initialization procedure can be terminated, for example by manually turning the switches, in particular the dip-switches, of the various actuators into a position for the closing sysstem's intended use. The next time the actuators of the closing system power up, no initialization procedure is executed because the switches are no longer in the position for initialization mode but rather in a position of the intended use mode. If the actuators are powerd up in the intended use mode, they will define their respective reference positions, will establish communication and then can be operated in order to perform their intended use, that is to open and close one or more movable elements of the closing system, that is for example to open and/or close doors or windows or the like.

Of course, after terminating the initialization procedure, the actuators can directly switch into the intended use mode without having to physically shut down the power and power up the actuators again. In that case the actuators can be referenced to a predefined reference position right away and, thereafter, be normally operated.

The referencing of the actuators is performed by first brining the actuators and the at least one movable element controlled by the actuators, respectively, into a completely closed position. This position can be detected, for example, by monitoring the electric current supplying the electric motor. The current will rise significantly, if the movable element has reached its completely closed position. Then, the actuators are moved into an opposite direction in order to bring the movable element into a pre-defined opened reference position. This movement is stopped as soon as the movable element or the actuator, respectively, reaches the pre-defined opened reference position. The reference position can be detected by means of a mechanical limit switch. Alternatively, the movable element's current position is constantly monitored and the movement is stopped, when the pre-defined reference position is reached. Finally, it would also be possible to provide some kind of actuating element of the actuator, for example an actuator chain, with a first part (for example a permanent magnet) of a sensing element, whereas a second part (for example a hall sensor) of the sensing element is fixedly located near the moving actuating element. When the first part of the sensing element during moving of the movable element into the opening direction reaches the fixedly mounted second part of the sensor element, the actuating element and the movable element, respectively, have reached the pre-defined opened reference position. This is sensed by the sensor element and a corresponding output signal is generated. For example, the permanent magnet can be connected to the chain of a chain actuator and the hall sensor can be fixedly located for example at a window or door frame within the reveal of a wall of a building or at or within a casing of the actuator. Hence, during activation of the actuator in an opening direction and during opening of the movable element, respectively, at some point the permanent magnet reaches the hall sensor element indicating that the pre-defined opened reference position has been reached.

Furthermore, each of the actuators is provided with an electrical motor for actuating the actuator's actuating element. In particular, if the actuator is a chain actuator, the electrical motor actuates directly or indirectly, for example via some kind of gear mechanism, a pinion, which extracts an actuator chain from the actuator housing in an opening direction or retracts the chain into the actuator housing in a closing direction. The electrical motor, in particular a rotating motor shaft or a rotating part of a gear mechanism, is connected with at least one permanent magnet moving in front of a fixedly mounted sensor element, for example a hall sensor. For example, the hall sensor can be mounted to a stationary part of the motor or the actuator housing. If the motor is activated, the permanent magnet(s) rotate in front of the sensor element, thereby inducing a corresponding electrical signal. The electrical signal may be, for example, a certain number of pulses. The signal is indicative of the amount of rotations the electrical motor has performed or of the path the movable element has performed in an opening direction. When the pre-defined reference position is reached, the electrical signal, for example the number of pulses counted so far, is assigned to the reference position thereby performing referencing of the actuator.

The rotating part of the electrical motor is preferably provided with two permanent magnets, for example disposed on opposite sides of an outer circumference of the motor shaft. Hence, when the electric motor is actuated, the motor shaft rotates and the magnets pass in front of the hall sensor generating the electrical signal, for example consisting of a pulse each time one of the magnets passes in front of the hall sensor. The pulses can be counted and can be used as an indication of the number of rotations the electric motor has performed and on the corresponding displacement to be moved by the actuator. The number of pulses can be set to zero when the element to be moved by the actuators of the closing system is provided in the completely closed position. Alternatively, the pulse counter can be set to zero when the element to moved by the actuators of the closing system is located in the pre-defined opened reference position.

During the intended use of the closing system, each time the movable element is in its completely closed position the pulse counter can be set to zero. Then, if the movable element or the actuator chain, respectively, moves into an open position and the permanent magnet attached to the actuator chain or any other of the actuator's actuating element reaches the fixedly mounted hall sensor, the number of pulses counted so far is assigned to the reference position, thereby performing a referencing of the actuator. Hence, each actuator can be reference prior to its intended use as well as during its intended use. This can considerably enhance accuracy of the closing system.

Following the referencing procedure of the actuators, they automatically switch into the intended use, allowing a movement of the at least one element to be moved by the actuators of the closing system into a desired position. A desired position can be defined by a desired value of the pulse counter of the electric motor or by a desired opening position of the element, for example in millimetres, which then has to be transformed into the corresponding number of pulse counts.

Based on the pulse signals received from the encoder (movable permanent magnets and fixed hall sensor) the computer program running on the microprocessor of an actuator effects a closed loop control of the actuator's or motor's movement. The current values of the position of the element to be moved by the actuators is determined by means of the encoder and forwarded, for example in the form of pulse counts, to the microcontroller. From there, the current value is transmitted to the other actuators via the data communication medium. Furthermore, in the microcontroller, the actuator's current position value is compared to a desired value. The desired value can be determined from the current position values of all the closing system's actuators. These position values from the actuators can be processed in the actuator in any desired way in order to obtain the desired position value to which the actuator's current value is compared. For example, it would be possible to determine the arithmetical mean value of the current positions of all actuators, in particular by weighting the various position values or not. A correction value for the control signal of the actuator is generated depending on the differences between the actual current position value on the one hand and the desired value on the other hand.

As a result of the correction value for the control signal the electric motor of the actuator is made move faster (if the current position is behind the desired value) or move slower (if the current position is ahead of the desired value). The speed of the motor can be varied, for example, by varying the voltage which is applied to the electric motor. A higher voltage would result in a faster movement and a lower voltage would result in a slower movement of the electric motor.

The closed loop control of the position of the movable element to be opened or closed by the actuators of the closing system is performed repeatedly in consecutive processing cycles. If one or more actuators cannot be brought into synchronisation with the other actuators of the closing system within a predefined time or within a predefined number of processing cycles, an error within the closing system is diagnosed and all actuators, that is the entire closing system, are deactivated. The same happens in a situation when the actuator's current position deviates too much from the desired position value, that is when the absolute value of the deviation between the actuator's current position and the desire position value exceeds a predefined threshold value.

The data communication medium used for exchanging information among the actuators of the closing system during the initialization procedure and during the intended use of the closing system and possibly even during the referencing of the actuators, can be embodied as a conventional bus system realized by one or more wires and/or optical fibres, for example like those used in a conventional computer system, a computer network or a motor vehicle. Alternatively, the data communication medium can also be realized without cables, for example by means of a radio or an optical data communication link (for example an infrared communication link). The realisation of the data communication medium without cables and wires has the advantage that the installation of the actuators can be performed must fast and is much easier. The actuators only have to be located and fixed at the desired positions and connected to an electrical energy supply for driving the electronic components within the actuators. This can be achieved by a cable connecting the actuators to an electric power supply providing 110 V to 230 V or after transformation of the supply voltage only 12 V to 24 V or any other desired voltage. Alternatively, it is also possible to provide the actuators with appropriate battery devices providing electric energy to the electronic components of the actuator for a limited amount of time. The batteries could be recharged by means of solar or photovoltaic panels, preferably making part of the actuator's casing. Discharged batteries could be simply replaced by charged batteries in case the batteries mounted in the actuator are not recharged automatically or the amount of recharging is not sufficient to maintain operability of the actuators for a undetermined period of time.

Preferably, the actuators are provided with one or more light emitting diodes (LEDs), possibly of different colours, for indicating the actuator's current status. The LEDs can be integrally formed in the actuator's housing and are well visible to the user from outside of the housing. The LEDs can indicate the actuator's current status by flashing a certain amount of times and/or by emitting light of a certain colour. The LEDs can indicate the current operational status (initialization procedure, referencing procedure or intended use) of the actuator. For example, at the end of the initialization procedure, the LEDs of each of the actuators can flash for a certain number of times, the number of flashes corresponding to the actuator's unique address. This means that at the end of the initialization procedure, for example, the actuator number 3 would flash three times and after a short pause again three times and so on, and the actuator number 8 would flash eight times and after a short pause again eight times and so on. This indicates to the user that the initialization procedure has come to an end, that the initialization procedure was successful and the unique address of each of the actuators after the fully automatic and autonomous initialization of the actuators. The flashing of the LEDs is terminated after leaving the initialization mode by activating the mode switch in each of the actuators.

Preferred embodiments of the present invention are described in detail in the following making reference to the enclosed drawings. These show:
- Fig. 1: a possible application of the closing system according to the present invention comprising a plurality of actuators for opening and closing windows,
- Fig. 2: schematically a possible switching circuit of the actuators of the closing system according to figure 1;
- Fig. 3: schematically a possible embodiment of an actuator of the closing system according to the present invention;
- Fig. 4a: a first part of a flow chart for realising the method according to the present invention in a preferred embodiment;
- Fig. 4b: a second part of the flow chart of figure 4a;
- Fig. 5: a flow chart of an embodiment of the procedure for automatic addressing the actuators making part of the procedure according to figure 4a; and
- Fig. 6: an electric motor used in an actuator according to figure 3 for actuating the chain.

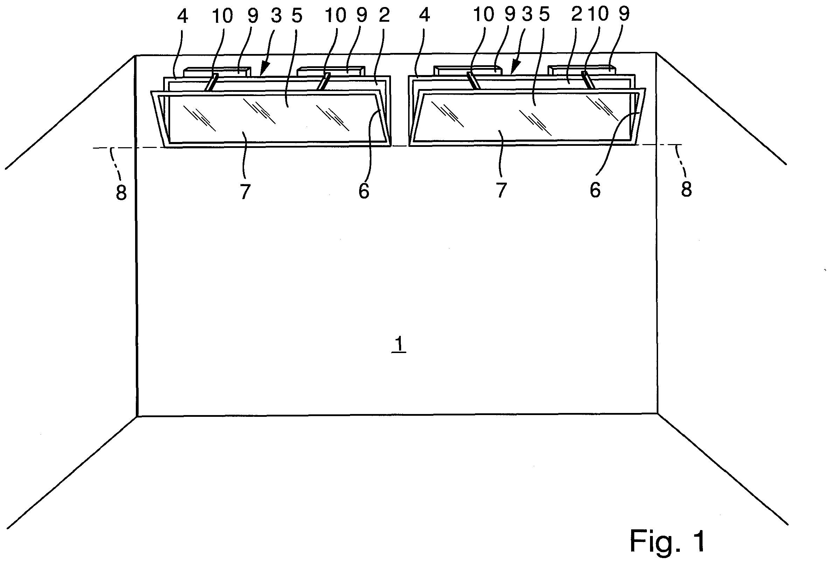

Figure 1 shows an example of the inside of a room of a building in a three dimensional view. One wall 1 of the room is provided with openings 2, into which windows 3 are inserted. The windows 3 comprise a frame 4 made of wood, metal or synthetic material, which is fixedly connected to the wall 1 and surrounds the openings 2. Furthermore, the windows 3 comprise a window sash 5 comprising a frame 6 made of wood, metal or synthetic material and a window pane 7 made of glass or a transparent plastic material allocated and mounted within the frame 6. The window sash 5 is movable around an axis 8 of rotation in respect to the wall 1 and the window frame 4, respectively.

Furthermore, figure 1 shows four actuators 9 which are used for actuating the windows 3, that is for opening and closing the window sashes 5. Hence, in the present embodiment the movable element actuated by the actuators 9 is embodied as a window sash 5. Of course, the movable element could also be embodied as a door, a hatch or the like, with or without transparent material. The actuators 9 form a closing system for moving the windows 3. In the embodiment of figure 1, each window 3 is provided with two actuators 9 spaced apart from one another. Of course, if the windows 3 to be moved are even larger than those shown in figure 1, it is well possible that each window 3 is equipped with more than two actuators 9, for example with three, four or six actuators. Furthermore, it is not necessary for the present invention that the window sashes 5 are movable around a horizontal axis 8 of rotation. Of course, it is also possible that the window sashes 5 are movable around a vertical axis of rotation or around an axis of rotation inclined in any desired angle. Furthermore, it is also possible that the axis of rotation is located at any desired point of the window 3, for example running along the top horizontal part of the window frame 4, or running horizontally between the top and the bottom part of the window frame 4 (swivel window).

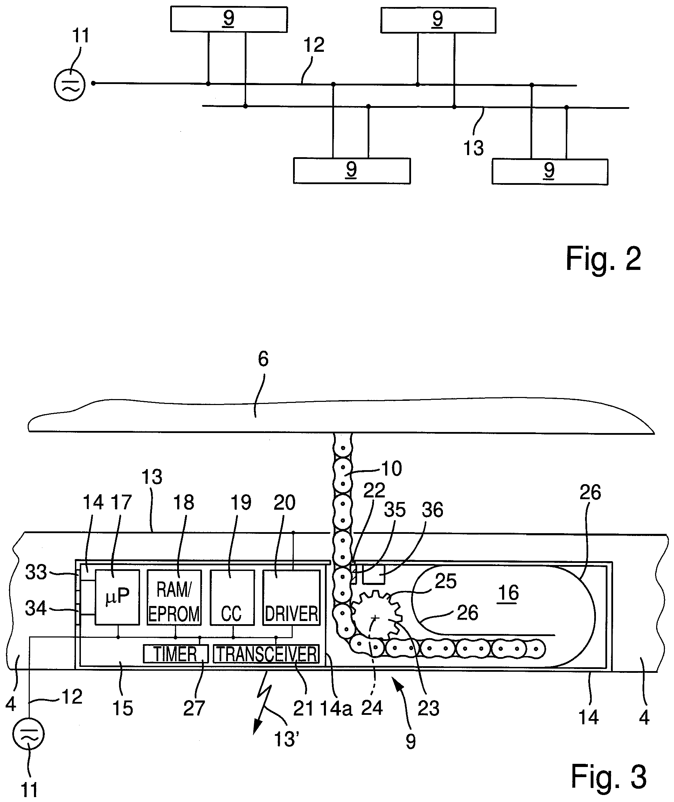

Furthermore, in the embodiment shown in figure 1, the actuators 9 are designed as chain-actuators comprising a chain 10 which can be extracted from an actuator housing in an opening direction or retracted into the actuator housing in a closing direction. Preferably, the actuator housing is fixed to the window frame 4 or the wall 1, respectively. One end of the actuator chain 10 is connected to the frame 6 of the window sash 5 and the other end of the chain 10 is wound up in the casing of the actuator 9. The actuators 9 are described in more detail below with reference to fig. 3.

When more than one actuator 9 is provided for actuating a window sash 5, it is necessary that the actuators 9 attached to the same movable element 5 are synchronously moved in order to avoid mechanical tensions in the window sash 5 and/or the actuators 9 and in order to assure a tight and safe closing of the window 3, in particular that the frame 6 of the window sash 5 fully lies on the corresponding parts of the window frame 4 when the window 3 is in its closed position. Furthermore, for esthetical reasons it may be necessary to provide for a synchronous movement of actuators 9 even if they are not connected to the same movable element, for example the same window sash 5. Returning to fig. 1, if the window sashes 5 of both windows 3 are contemporaneously actuated (opened or closed), it may be desirable to have the actuators 9 of the two window sashes 5 actuated synchronously.

For these reasons, the present invention suggests a method and a closing system which provides for synchronous movement of a plurality of actuators 9, in paraticular of the actuators' chains 10. It is a further advantage of the present invention that all actuators 9 used in the closing system according to the present invention are embodied identically and that mounting the actuators 9 at the desired position between the wall 1 or the window frame 4, respectively, on the one hand and the window sash 5 or the frame 6, respectively, on the other hand is very easy, straight forward and timesaving. Further, it is possible to selectively replace one or more of the actuators 9, to add additional actuators 9 or to remove actuators 9 from the closing system without having to rearrange the layout and setup of the closing system comprising the actuators 9 and, in particular, without having to distribute among the actuators 9 and assign to them individual unique identifiers. Finally, the actuators 9 can be manufactured with reduced accuracy and/or using less accurate electronic and mechanical components resulting in cheaper actuators 9. Despite the use of cheaper actuators 9, by means of the present invention it is possible to assure synchronous movement of the actuatuators 9.

Figure 2 shows a schematical view of an electronic circuit for interconnecting the actuators 9 of the closing system of figure 1 with one another. First of all, all actuators 9 are connected to a power supply 11 by means of a power supply line structure 12. The power supply 11 provides alternate or direct current to the actuators 9 and the electronic components allocated therein. Further, the power supply 11 can provide conventional supply voltage, for example 230 V or 110 V. Alternatively, the power supply 11 may also provide a voltage transformed to 24 V, 12 V or any other low voltage. As an alternative to the external power supply 11, it would also be possible that each of the actuators 9 has its own internal power supply, for example in the form of a battery, preferably rechargeable. In that case no central or common power supply 11 and no supply line structure 12 would be needed for operating the actuators 9. However, the power supply 11 and the supply line structure 12 could be provided nonetheless for recharging the actuators' local batteries. Alternatively, the actuators' local batteries could also be recharged by means of local devices making part of the actuators 9, for example by means of solar panels located on the outside of the actuator's 9 housing. In that case the actuators 9 would be completely self-sustaining from an energetical point of view.

Furthermore, the actuators 9 are interconnected with one another by means of a data communication medium 13, in order to allow the exchange of information between the actuators 9. The actuators 9 exchange information, in particular regarding their current position, accoring to a round-robin scheduling. In the embodiment shown in figure 2, the data communication medium 13 is embodied as a conventional wired data bus with one or more cables or optical fibres. Of course, it would also be possible to embody the data communication 13 as a wireless data bus. In that case the physical level of the data communication medium would be a radio or an optical data connection link. Hence, information could be exchanged among the actuators 9 via a radio, ultrasonic or an optical transmission, too. In that case the lines 13 indicating the data communication medium in figure 2 would be purely functional. Further, in case of an exchange of information among the actuators 9 via a radio or an optical connection, the actuators 9 adapted for transmitting information are provided with a transmitter (Tx) and those actuators 9 adapted for receiving transmitted information are equipped with a receiver (Rx). Of course, it is possible that one or more of the actuators 9 is equipped with a combined sending and transmitting unit (transceiver TxRx). In the case of an exchange of information among the actuators 9 via a radio data communication link, after locating and fixing the actuators 9 in the desired positions no additional data communication medium 13 has to be installed. If the actuators 9 are also energetically self-sustained, the actuators 9 can simply be located and fixed at desired positions and no further interconnections by supply lines 12 and/or data communication media 13 is necessary.

Figure 3 shows a preferred embodiment of an actuator 9. The actuator 9 is a chain actuator, for example like actuator 9 used in the closing system of figure 1. The actuator 9 has an external casing or housing, preferably made of plastic. The actuator 9 is fixed to the window frame 4 and/or the wall 1 with its casing 14. The actuator 9 is at least functionally divided into two parts, a first electronic control compartment 15, which comprises all electronic components necessary for performing a desired movement of the chain 10. Additionally, actuator 9 also comprise a second compartment 16 adapted for receiving the chain 10 when it is retracted into the casing 14. The two parts 15, 16 of the actuator can be divided by a separating wall 14a. Preferably, the chain 10 is folded in the second part 16 of the actuator 9 in several layers one above the other, preferably in three layers, in order to optimally use the space available in the inside of the actuator casing 14 or the second part 16, respectively. This allows a particularly compact design of the actuator's casing 14 and/or the accommodation of a relatively long chain 10 in the casing 14.

The actuator 9 comprises in its electronic control compartment 15 a microprocessor 17 for executing a computer program. A computer program executable on the microprocessor 17 can comprise a first part for realizing an initialization procedure, a second part for realizing a referencing procedure and a further part, for realizing the intended use of the actuator 9 and the entire closing system. Of course, various parts of the computer program can be integrated in a single software. The computer program may be stored in a memory 18. Upon power-up of the actuator 9 the computer program can be executed partially or entirely by microprocessor 17 over an internal data bus (not shown).

Apart from the computer program the memory 18 can also store other information or data regarding the operation and status of the actuator 9, for example reference values for referencing the actuator 9 or the chain 10, respectively, to a pre-defined reference position, or correction values for correcting control signals and the movement of the chain 10, in particular for enhancing or reducing the speed of the chain 10 in order to reach a desired position earlier or later. Further, the actuator's 9 electronic compartment 15 comprises a communication controller 19, which puts data generated or acquired by the microprocessor 17 and to be transmitted via the data communication medium 13 into a format corresponding to the bus protocol used on the data communication medium 13. The bus protocol can be any known protocol or it can be some kind of proprietary protocol adapted for the use in the actuator 9. The communication controller 19 prepares the data for transmission via the data communication medium 13.

For data transmission the processed data is transmitted via the internal bus from the communication controller 19 to the bus driver 20, which puts the signals on the data communication medium 13 for transmission to the other actuators 9. Similarly, information and/or data transmitted from the other actuators 9 are received from the data communication medium 13 by the driver 20, forwarded to the communication controller 19 and then transmitted to the microprocessor 17 for further processing. In the embodiment of figure 3 the data communication medium 13 may alternatively be a radio communication link 13'. In that case the data communication medium 13 is no longer necessary. For data transmission across the radio data link 13', an additional transceiver 21 is provided between the driver 20 and the communication link 13'. The transceiver 21 transmits the data and information to the other actuators 9 via the radio data communication link 13'. Similarly, information and/or data transmitted from the other actuators 9 are received via the radio data communication link 13' by the transceiver 21 and forwarded to the driver 20 and further to the communication controller 19 and then to the microprocessor 17 for further processing. The communication between the driver 20 and the transceiver 21 can be performed by means of the internal bus, too. Finally, a timer 27 is provided in the actuator 9. Of course, the timer 27 can be embodied as a hardware or a software timer. A software timer could be embodied as part of a computer program running on microprocessor 17.

All electronic components 17 to 21 and 27, if embodied as a hardware timer, are attached to the power supply 11 via the supply lines 12. Furthermore, preferably all components 17 to 21 and 27, if embodied as a hardware timer, are interconnected with one another by means of an internal bus system (not shown in figure 3). The internal bus system may be, for example, an SPI-bus, or any other kind of data transmission bus with one or more transmission lines. Additionally, a switching element 33, for example a dip-switch, is provided in the actuator 9. In the embodiment of figure 3 the switch 33 is located in the electronic compartment 15 inside the casing 14 such that it can be actuated from outside the casing 14. The switch 33 serves for switching the actuator's operation mode between the initialization mode and the conventional operation mode, in which the actuator 9 is operated in its intended use. Further, one or more optical signalling devices 34, for example LEDs, are provided in the actuator 9. In the embodiment of figure 3 one LED 34 is located in the electronic compartment 15 inside the casing 14 such that it is visible for a user from outside the casing 14. The LED 34 can indicate the current operation status, in particular whether the initialization mode has successfully come to an end, to the user.

The chain compartment 16 opens to the outside through an opening 22 in the outer casing 14. The chain compartment 16 comprises the chain 10 or at least part of it introduced into the compartment 16 through the opening 22. The chain 10 is moved into the casing 16 and removed from the casing 16 by means of a pinion 23, which can be rotated around a rotation axis 24. Sprockets 25 of the pinion 23 extend into gaps of the chain 10 located in a chain link or between two adjacent chain links. Rotating the pinion 23 counter clockwise retracts the chain 10 into the accommodation portion of compartment 16 and moves the window sash 5 into a more closed position. In contrast, rotation of the pinion 23 clockwise will extract the chain 10 from the accommodation portion of compartment 16 and will move the window sash 5 into a more open position. Preferably, when retracting the actuator chain 10 into the accommodation portion of the chain compartment 16, exemplary shown guiding members 26 are provided. A certain point of the chain 10 corresponding to a predefined reference position is provided with a permanent magnet 35 moving in and out the casing 14 together with the chain 10. Within the chain compartment 16 of the casing 14 a hall sensor 36 is located next to the opening 22 in such a way that the chain 10 and the permanent magnet 35 pass in front of the sensor 36 when moving in and out the casing 14 through the opening 22. The magnet 35 in cooperation with the sensor 36 serves for determining a reference position of the actuator 9 for enhancing accuracy of the movement during the following intended use of the actuator 9. Of course, the position sensor 35, 36 can also be embodied differently without a hall sensor 36, for example by means of a limit switch or a position indicator switch.

The pinion 23 is connected either directly or indirectly by means of a gear mechanism (not shown in figure 3) to an electric motor (not shown in figure 3) for actuating the pinion 23. The electric motor is preferably located in the electronic compartment 15, but could also be located in the chain compartment 16. The operation of the electric motor is controlled by means of a closed loop control mechanism realized by the microprocessor 17 and an appropriate computer program executing thereon. The computer program determines a control signal for the operation of the electric motor, in particular having a certain voltage. Furthermore, correction values for the control signal are determined by means of a closed loop control, the correction signal resulting in a higher or a lower voltage of the control signal. The closed loop control is effected by each of the actuators 9 individually.

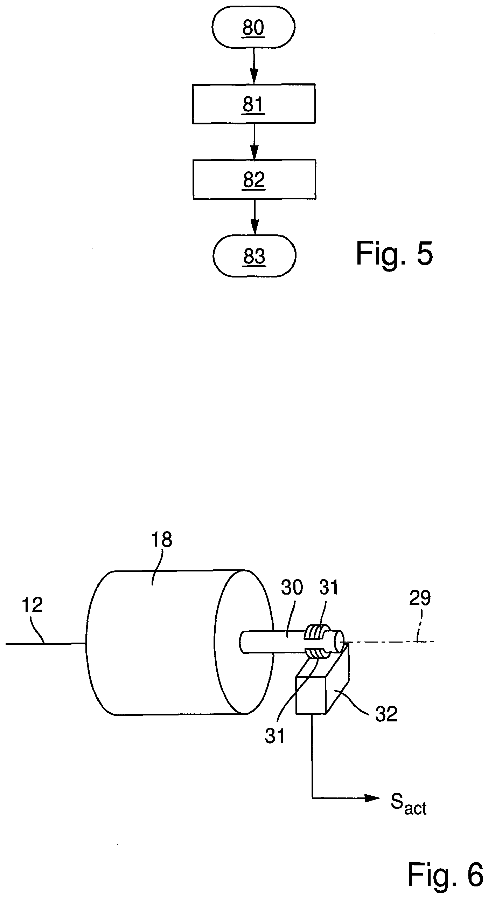

Figure 6 shows an example of an electric motor used in the actuators 9 of the closing system according to the present invention for actuating the pinion 23. The motor is designated with reference sign 28, its motor shaft rotatable around an axis 29 of rotation with reference sign 30. On opposite sides of the outer circumference of the shaft 30 two permanent magnets 31 are located and fixed. They rotate together with the motor shaft 30. Furthermore, a hall sensor 32 is located near the motor shaft 29 such that the magnets 31 rotate in front of the sensor 32 if the motor 28 is actuated. By means of the magnets 31 rotating in front of the hall sensor 32 an output signal s_act is induced in the sensor 32. The signal s_act comprises a plurality of pulses, each pulse corresponding to a rotation of the motor shaft 30 by 180° or half a rotation of the shaft 30. Hence, the amount of pulses of the signal s_act is indicative of the actual distance the chain 10 has been extracted or retracted in respect to a zero point position and, therefore, for the actuator's or the chain's current position. The sensor 31, 32 is embodied such that absolute values of the chain's position can be determined.

During the intended use of the actuators 9 of the closing system, each of the actuators 9 regularly determines its current position by reading the current status of the output signal s_act of its electric motor 28. This information is transmitted to the other actuators 9 via the data communication medium 13 or the radio data communication link 13'. Each of the actuators 9 receives current position information from the other actuators 9 of the closing system via the data communication medium 13, 13'. Based on the received current position information from the other actuators 9 and based on the current position information of the electric motor 28 of the current actuator 9, a correction value for the control signal of the actuator's electric motor 28 can be determined in the actuator 9.

Based on the current position information of all the actuators 9 of the closing system, that is from the actuator's current position and of the other actuators' current position received via the data communication medium 13, 13', each of the actuators 9 can determine a desired value of the current position. The desired value can be, for example, a mean value of the actuators' current position. Each of the actuators 9 can compare the current position of its electric motor 28 with the desired value in order to determine a deviation value and depending on the deviation value a correction value for the control signal. For example, if the actuator 9 or its electric motor 28, respectively, moves too slow (the number of impulses of the electric motor 28 of the actuator 9 is smaller than the desired value) the electric motor 28 has to be accelerated, for example by elevating the voltage. On the other hand, if the actuator 9 or its electric motor 28, respectively, moves too fast (the number of pulses of the electric motor 28 of the actuator 9 is larger than the desired value), the supply voltage for the electric motor can be reduced. The elevation and the reduction of the voltage of the control signal are performed by means of the calculated correction signal. Hence, each of the actuators 9 can control individually the position of its chain 10 by means of a closed loop control.

This closed loop control of the actuator's 9 position is performed by a computer program executing on the microprocessor 17 of the actuator 9 during its intended use. The above identified steps are cyclically repeated, for example every 50 ms. Within this cycle each of the actuators 9 determines its current position or the current position of its chain 10, respectively, transmits the position data to the other actuators 9, calculates a correction value and actuates its electric motor 28 with the corrected control signal. Within each cycle the data transmission takes only very little time. For example, the transmission of the position information from one of the actuators to the other actuators via the data communication medium 13 is effected within only 2 ms. This means that, for example, in a closing system comprising eight actuators 9, the position information of all actuators 9 is transmitted to the other actuators 9 within 16 ms. This leaves approximately 34 ms for the other actuators 9 to individually control their current positions by means of the above-described closed loop control. Of course, the transmission times indicated above are only examples. The invention is not limited to the indicated transmission times. Depending on the actual application of the closing system the transmission times can vary and have different values.

In the next processing cycle of the computer program the current position information of the electric motors 28 of the actuators 9 are determined and transmitted to the other actuators 9 via the data communication medium 13, 13' again. Then, still in the same processing cycle in each of the actuators 9 the desired value for the position is calculated and compared to the current position of the electric motor 28 of the actuator 9, independently. Hence, each of the actuators 9 determines its individual correction value independently from the other actuators 9 and applies the corrected control signal, for example a enhanced or reduced voltage, to its electric motor 28. The program is cyclically repeated until the final position of the window sash 5 is reached.

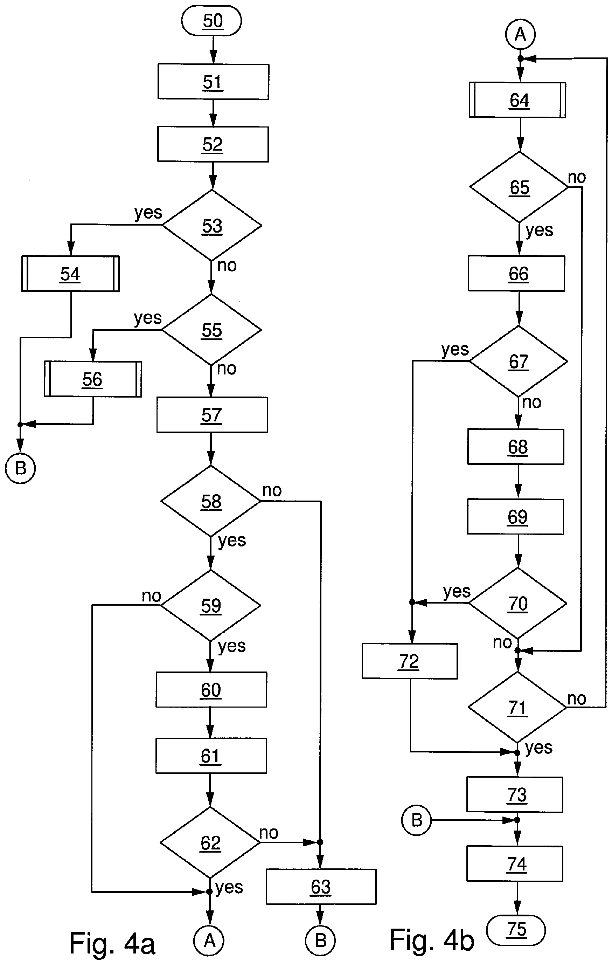

In practice an actuator's position should be assimilated to the other actuators' positions within a few processing cycles of the computer program. If this is not the case, an error is detected and all actuators 9 are made to stop. According to a preferred aspect of the present invention, the actuators 9 of the closing system under certain circumstances automatically and autonomously run through an initialization procedure, in which unique identifiers or addresses for each of the actuators 9 are determined and assigned to the actuators 9 and the unique addresses are communicated to all actuators 9 of the closing system. The initialization procedure is preferably part of the computer program running on the microprocessor 17 of the actuator 9. An example of a flow chart of a computer program for realizing the initialization procedure is shown in figure 4a. The flow chart of figure 4b corresponds to that part of the computer program for realizing the conventional operation mode of the actuator 9 during the intended use of the closing system. The automatic addressing procedure as part of the initialization procedure is shown in detail in figure 5. Computer programs like those of figures 4a to 5 preferably run on all actuators 9 or their microprocessors 17, respectively, of the closing system. The computer program is executed in order to move the actuator 9 or its chain 10, respectively, into a desired final position. The final position can be set by means of a switch located in the room shown in figure 1 and manually actuated by a user or by means of a higher-ranking control, for example a facility management control arrangement, which automatically opens and closes windows 3 or doors of a building according to the building's or external status parameters, for example the current inside or outside temperature.

Referring now to figure 4a, the computer program starts in functional block 50. Thereafter, the various hardware components 17 to 21 and 27, if realized as a hardware-timer, of the actuator 9 are initialized in functional block 51. This part of the computer program provides for a proper functioning of the internal elements of the integrated circuit comprising the microprocessor 17 and all the other components 18 to 21 and 27, if present, or at least some of them. In this part of the program the input and output ports of the microprocessor 17 are set up, which are connected to the sensors for determining the current position of the chain 10 (rotational sensors 32 of electric motor 28 and reference point detection sensors described in detail below) and to the electric motor 28. Further input and output ports may also be connected the dip-switch 33 and to one or more LEDs 34. Various other hardware elements and supporting devices are set up, too, like timers 27, analogue/digital converters, etc..

Then, in functional block 52, the current position of the actuator's 9 dip switch 33 is read in order to determine whether the actuator 9 is in the initialization mode or in the conventional operation mode for the intended use of the actuator 9. A major aspect of the initialization mode is that the actuators 9 of the closing system are provided automatically and autonomously with a unique address each. After production and prior to the intended use of the actuators 9 all actuators 9 are identical. Assigning unique addresses to the actuators 9 allows their identification when sending and receiving position information across the data communication medium 13, 13'.

In an interrogation block 53 it is checked whether the actuator 9 is to be addressed, that is whether actuator 9 has to run through the initialization procedure. If so ("yes"), the automatic addressing procedure of functional block 54 and described in detail with reference to the flow chart of figure 5 is executed. The addressing of the actuators 9 is necessary, for example, after the actuators 9 have been located in their designated positions, in particular fixed to the window frame 4 or the wall 1 on the one hand and to the frame 6 of the window sash 5 on the other hand, and before the closing system is operated in its intended use for the first time, or if the addressing information stored in the actuators 9, for example in memory 18, has got lost for one reason or the other. After having performed the automatic addressing of functional block 54 the program continues at "B" in the flow chart of figure 4b. After storing the actuator's unique address the initialization procedure is terminated by interrupting the power supply to the actuator 9.

If addressing of the actuator 9 is not required ("no"), the computer program proceeds to interrogation block 55, where it is checked whether the actuator 9 is turned on for the first time after having run through the automatic addressing procedure of functional block 54. If that is the case ("yes"), the actuator 9 has to be referenced by running through function block 56 for determining the chain's 10 reference position by means of the reference position sensor 35, 36. If the actuator 9 has been turned on without running through the automatic addressing procedure of functional block 54, it is not necessary to run through the procedure of functional block 56 for determining the reference position again. In that case ("no") the computer program proceeds to functional block 57, where the coherence is determined between the adjustment or the parameters set during the hardware initialization phase of functional block 51 and the direction of movement of the actuator 9 or the chain 10, respectively. For example, in block 57 it is determined whether the length of the chain 10 fits the set-up and adjustment values of the actuator 9. Furthermore, it is checked whether all actuators 9 have identical adjustment and set-up parameters.

In interrogation block 58 it is checked whether the adjustments and settings made during the hardware initialization of functional block 51 and the direction of movement of the chain 10 or the actuator 9, respectively, are coherent. If so ("yes"), the computer program proceeds to interrogation block 59, where it is checked whether the actuator 9 is operated in a synchronised operation mode, that is whether there are other actuators 9 making part of the closing system to which the present actuator 9 has to be synchronised. This allows operation of an actuator 9 even on its own without being synchronised to other actuators 9. If the actuator 9 is not operated in a synchronised operation mode ("no"), the computer program goes directly to a second part of the program shown in figure 4b at position "A".

If the actuator 9 is operated in the synchronised operation mode ("yes"), the computer program proceeds to functional block 60, where set-up and initialization information from the other actuators 9 of the closing system is received via the data communication medium 13, 13'. This information may comprises among others the unique addresses which the actuators 9 of the closing system have assigned to themselves during the initialization procedure of functional block 54. If et-up and initialization information from all other actuators 9 of the closing system has been received, the computer program proceeds to functional block 61 where compatibility of the adjustments and settings of the actuators 9 is determined, in particular whether the actuators' addresses are indeed unique within the entire closing system. Then, in interrogation block 62 it is checked, whether the adjustments and settings are compatible. If so ("yes"), the procedure goes on to the second part of the computer program beginning with block "A" at the top of figure 4b. If not ("no"), an error signal is emitted, for example by means of an acoustic device and/or one or more of the actuator's 9 LEDs 34 in functional block 63. This is where the computer program also arrives from interrogation block 58 in case the adjustments and settings on the one hand and the direction of movement of the chain 10 or the actuator 9, respectively, on the other hand are not coherent ("no"). From functional block 63 the computer program proceeds to step "B" of the second part of the computer program shown at the end of the flow chart of figure 4b.

In figure 4b starting from step "A" the computer program continues in functional block 64, where the actuator 9 is moved by means of a closed loop control of its position. This corresponds to the intended use of the closing system. The closed loop control of the position of the actuator 9 or the chain 10, respectively, has been described in detail above. In interrogation block 65, it is checked whether the actuator 9 is operated in a synchronised operation, that is whether there are other actuators 9 making part of the closing system with which the actuator 9, on which the computer program is executed, has to be synchronised during its movement. In case there are other actuators 9 to which the current actuator 9 has to be synchronised ("yes"), the procedure continues in functional block 66, where the actuator 9 communicates with the other actuators 9 in order to transmit to them its own current position and to receive the current positions of the other actuators 9 via the data communication medium 13, 13'.

Thereafter, in interrogation block 67, it is checked whether a communication error has occurred during the transmission of the actuators' current positions via the data communication medium 13, 13'. If no error has occurred ("no"), the program continues with functional block 68, where a deviation of the actuator's 9 current position in respect to the positions of the other actuators 9 is determined. In particular, a desired position is determined from the current positions of the other actuators 9, for example by determining a mean position value. Based on the deviation of the actuator's current position and the other actuators' current positions a correction value is determined for correcting the control signal to be applied to the actuator's electric motor 28. Then, in functional block 69, the control signal is applied to the actuator 9 or its electric motor 28, respectively, together with the correction value determined form the deviation calculated in functional block 68, thereby slowing down or accelerating the speed of movement of the chain 10 or the actuator 9, respectively. In the following interrogation block 70 it is checked, whether the deviation calculated in functional block 68 exceeds a pre-defined threshold value. If there is no excessive deviation of the position of the actuator 9 in respect to the positions of the other actuators 9 ("no"), the procedure continues with interrogation block 71, where it is checked, whether the desired final position of the actuator 9 has already been reached. If not ("no"), the method according to the present invention continues in functional block 64.

If in interrogation block 65 it is determined that the actuator 9 is not operated in a synchronised operation mode ("no"), that is if the actuator 9 is the only actuator of the closing system, the procedure skips blocks 66 to 70 and goes directly to interrogation block 71. If in interrogation block 67 a communication error is determined ("yes") or if in interrogation block 70 an excessive deviation of the actuator's 9 current position in respect to the other actuators' current position is determined ("yes"), the procedure continues in functional block 72, where an acoustic and/or optical error signal is emitted, for example by means of the LEDs 34. If in interrogation block 71 it is determined that the desired final position of the actuator 9 has already been reached ("yes"), the program continues with functional block 73, where the movement of the actuator 9 or the chain 10, respectively, is stopped. Then in functional block 74 the current data values of the actuator 9 are backed up, for example in memory 18. The data to be backed up can be data regarding an error signalled in functional block 63 and/or 72 as well as data regarding the deviation of the actuator's 9 current position in respect to the current positions of the other actuators 9 determined in functional block 68 or any other data. In functional block 75 the execution of the computer program comes to an end. In order to drive the actuator 9 or the chain 10, respectively, to a newly defined final position, the computer program according to figures 4a and 4b can be executed once more.

The process of automatically and autonomously addressing of the actuator 9 of functional block 54 is described hereinafter in detail with reference to the flow chart of figure 5. The automatic addressing starts in functional block 80. All actuators 9 of the closing system have already been provided with an electrical current before executing the computer program of figures 4a and 4b, thereby powering up the actuators 9 and, in particular starting the timer 27 as soon as the current applied to the timer 27 is sufficient to make it work properly. The timer 27 will start to count upwards or downwards continuously. If the timer 27 reaches a maximum or minimum value it starts again from the starting value. Preferably, the timer 27 counts from 0 to 10⁶. In functional block 81 the current timer count of the actuator's timer 27 is read and in functional block 82 stored in the actuator 9, for example in memory 18. It is obvious that due to different signal propagation times (the electrical current reaches the actuators 9 of the closing system at different points in time) and due to statistical spread of the electronic properties of the actuator's electronic components 17 to 21 and 27, it is mere coincidence when the timer 27 is started and when the current timer count is read. Hence, the value of the current timer count stored in functional block 82 is a random number between 0 and 10⁶.

The random number stored in the actuator 9 in functional block 82 can be directly taken as the actuator's unique address. Alternatively, in functional blocks 60 or 61 the actuators' unique addresses can be determined based on the random numbers assigned to the actuators 9. For example, the actuators 9 via the data communication medium 13, 13' exchange the random numbers assigned to them. Then each actuator 9 of the closing system has knowledge about the random numbers assigned to each of the actuators 9. For example, the actuator 9 with the lowest random number assigned to it can assign the lowest address, for example "0" or "1", to itself. The actuator 9 with the next higher random number assigned to it can assign the next higher address, for example "1" or "2" to itself and so on until the actuator 9 with the highest random number assigned to has assigned the highest address, for example "7" or "8" to itself.

After having stored the random number in the actuator 9 in functional block 82, the automatic addressing comes to an end in functional block 83 and the computer program returns to "B" in figure 4b, where the random number or the unique address is backed up in fuctional block 74 and the initialization procedure comes to an end in functional block 75.

Summing up, each of the actuators 9 can be identically embodied, in particular there are no master or slave actuators. Each actuator 9 of the closing system autonomously controls the position of its own chain 10 adapting its position to the positions of the chains 10 of the other actuators 9 of the closing system. Further, upon power-up of the closing system all actuators 9 of the closing system automatically and autonomously assign themselves a unique address. These features result in the flexible closing system according to the present invention. Additional actuators 9 can be easily provided in the closing system, one or more actuators 9 can be easily removed from the closing system and/or replaced by other actuators 9. Furthermoren the closing system according to the present invention can be easily installed and operated. In case of an immediate stop of the closing system (functional blocks 72 and 83) each actuator 9 will provide for a stop of its own electric motor 28.

## Claims

1. Method for enabling a synchronous movement of at least two actuators (9) of a closing system, the actuators (9) connected to at least one element (3; 5) to be moved, in particular a door or a window, the method comprising the steps of:
- providing the actuators (9) each with a unique address, and
during a subsequent intended use of the closing system:
- exchanging information among the actuators (9) via a data communication medium (13; 13') interconnecting the actuators (9) with one another, the information regarding the current individual positions of the actuators (9) during their operation as part of the intended use, and
- processing the information, determining correction values for at least one of the actuators (9) and applying the at least one actuator (9) with the correction values, in order to make the actuators (9) move synchronously,
**characterized by** the actuators (9) automatically and autonomously assigning themselves their unique addresses during an initialization procedure executed at least once before the intended use of the closing system, wherein the unique addresses are assigned to the actuators (9) by
a) starting at least one timer (27) at the beginning of the initialization procedure,
b) when the first actuator (9) of the closing system is provided with an electrical current, determining the current timer count and assigning the current timer count to the first actuator (9),
c) when a further actuator (9) is provided with an electrical current, determining the current timer count and assigning the current timer count to the further actuator (9), and
d) repeating step c) until all actuators (9) of the closing system have been assigned a current timer count.

2. Method according to claim 1, **characterized in that** the timer (27) provides for a random number, preferably in the range of 0 ... 10⁶.

3. Method according to claim 1 or 2, **characterized in that** after each of the actuators (9) has been assigned a current timer count, the actuators (9) automatically and autonomously determine the overall number of actuators (9) within the closing system and whether the current timer counts assigned to the actuators (9) are unique.

4. Method according to claim 3, **characterized in that** if two of the actuators (9) have been assigned identical current timer counts steps a) to d) are repeated.

5. Method according to claim 1 to 4, **characterized in that** the current timer counts assigned to the actuators (9) are indicative of their unique addresses.

6. Method according to claim 1 to 5, **characterized in that** each actuator's unique address is stored in the actuator (9).

7. Method according to one of claims 1 to 6, **characterized in that** the actuators (9) following a sequence corresponding to their unique addresses one after the other each start a data transmission via the data communication medium (13, 13') communicating to the other actuators (9) its unique address.

8. Method according to one of claims 1 to 7, **characterized in that** the initialization procedure is activated for a certain number of actuators (9) interconnected by the data communication medium (13; 13') by means of actuator individual switches (33), in particular dip switches.

9. Method according to one of claims 1 to 8, **characterized in that** at the beginning of the intended use of the closing system, all actuators (9) are activated such that the at least one element (3; 5) to be moved by the actuators (9) of the closing system is brought into a completely closed position.

10. Method according to claim 9, **characterized in that** after bringing the at least one element (3; 5) into the closed position, all actuators (9) are activated such that the at least one element (3; 5) is brought into a pre-defined opened reference position.

11. Method according to one of claims 1 to 10, **characterized in that** during the intended use of the closing system, each actuator (9) regularly transmits its own position information to the other actuators (9) via the data communication medium (13; 13').

12. Method according to one of claims 1 to 11, **characterized in that** during the intended use of the closing system, each actuator (9) regularly receives position information from the other actuators (9) via the data communication medium (13; 13').

13. Method according to claim 12, **characterized in that** during the intended use of the closing system, each actuator (9) determines differences of its own position in respect to the positions of the other actuators (9) and determines a respective correction value for possibly correcting its own movement.

14. Method according to one of claims 11 to 13, **characterized in that** during the intended use of the closing system, in order to provide for a synchronous movement of the actuators (9) of the closing system, each actuator (9) controls its movement speed by means of a closed loop control.

15. Method according to one of claims 1 to 14, **characterized in that** the actuators' position information is cyclically transmitted via the data communication medium (13; 13') contained in data packets, wherein the unique address of the actuator (9) from which the transmitted data packets originate is contained in the transmitted data packets.

16. Method according to one of claims 1 to 15, **characterized in that** all actuators (9) of the closing system are stopped if during the intended use of the closing system
- the difference between one of the actuator's position and the positions of the other actuators (9) exceeds a predefined threshold value and/or
- after a number of processing cycles the difference between one of the actuator's position and the positions of the other actuators (9) cannot be reduced.

17. An actuator (9) of a closing system, the closing system comprising the actuator (9) and at least one other identical actuator (9) and a data communication medium (13; 13') interconnecting the actuator (9) and the at least one other actuator (9), the actuator (9) being adapted to be connected to at least one element (3; 5) to be moved, in particular a door or a window, the actuator (9) comprising means for enabling its movement synchronously in respect to the at least one other actuator (9) of the closing system, **characterized by** the actuator (9) comprising means for automatically and autonomously assigning itself a unique address during an initialization procedure executed at least once before the intended use of the closing system, wherein the means for assigning the unique address are adapted to
a) start at least one timer (27) at the beginning of the initialization procedure,
b) when the first actuator (9) of the closing system is provided with an electrical current, determine the current timer count and assign the current timer count to the first actuator (9),
c) when a further actuator (9) is provided with an electrical current, determine the current timer count and assign the current timer count to the further actuator (9), and
d) repeat step c) until all actuators (9) of the closing system have been assigned a current timer count.

18. Closing system comprising at least two identical actuators (9) and a data communication medium (13; 13') interconnecting said actuators (9), said actuators (9) being adapted to be connected to at least one element (3; 5) to be moved, in particular a door or a window, the actuators (9) of the closing system each comprising means for enabling a synchronous movement of the at least two actuators (9) of the closing system, **characterized by** each of the actuators (9) of the closing system comprising means for automatically and autonomously assigning themselves their unique addresses during an initialization procedure executed at least once before the intended use of the closing system, wherein the means for assigning the unique address are adapted to
a) start at least one timer (27) at the beginning of the initialization procedure,
b) when the first actuator (9) of the closing system is provided with an electrical current, determine the current timer count and assign the current timer count to the first actuator (9),
c) when a further actuator (9) is provided with an electrical current, determine the current timer count and assign the current timer count to the further actuator (9), and
d) repeat step c) until all actuators (9) of the closing system have been assigned a current timer count.

## Patentansprüche

1. Verfahren zum Ermöglichen einer synchronen Bewegung mindestens zweier Aktoren (9) eines Schließsystems, wobei die Aktoren (9) mit mindestens einem Element (3; 5), das bewegt werden soll, insbesondere einer Tür oder einem Fenster, verbunden sind, wobei das Verfahren die folgenden Schritte umfasst:
- Versehen der Aktoren (9) jeweils mit einer eindeutigen Adresse und während einer darauffolgenden vorgesehenen Verwendung des Schließsystems:
- Austauschen von Informationen zwischen den Aktoren (9) über ein Datenkommunikationsmedium (13; 13'), das die Aktoren (9) miteinander verbindet, wobei die Informationen die aktuellen einzelnen Positionen der Aktoren (9) während ihres Betriebs im Rahmen der vorgesehenen Verwendung betreffen, und
- Verarbeiten der Informationen, Bestimmen von Korrekturwerten für mindestens einen der Aktoren (9) und Anwenden der Korrekturwerte auf den mindestens einen Aktor (9), damit sich die Aktoren (9) synchron bewegen , **dadurch gekennzeichnet, dass** sich die Aktoren (9) ihre eindeutigen Adressen während eines Initialisierungsvorgangs, der mindestens einmal vor der vorgesehen Verwendung des Schließsystems ausgeführt wird, automatisch und autonom zuordnen, wobei die eindeutigen Adressen den Aktoren (9) durch Folgendes zugeordnet werden:
a) Starten mindestens eines Zeitgebers (27) zu Beginn des Initialisierungsvorgangs,
b) wenn der erste Aktor (9) des Schließsystems mit einem elektrischen Strom versorgt wird, Bestimmen des aktuellen Zeitgeberstands und Zuordnen des aktuellen Zeitgeberstands zu dem ersten Aktor (9),
c) wenn ein weiterer Aktor (9) mit einem elektrischen Strom versorgt wird, Bestimmen des aktuellen Zeitgeberstands und Zuordnen des aktuellen Zeitgeberstands zu dem weiteren Aktor (9), und
d) Wiederholen von Schritt c), bis allen Aktoren (9) des Schließsystems ein aktueller Zeitgeberstand zugeordnet worden ist.

2. Verfahren nach Anspruch 1, **dadurch gekennzeichnet, dass** der Zeitgeber (27) eine zufällige Zahl, vorzugsweise im Bereich von 0 ... 10⁶, bereitstellt.

3. Verfahren nach Anspruch 1 oder 2, **dadurch gekennzeichnet, dass**, nachdem jedem der Aktoren (9) ein aktueller Zeitgeberstand zugeordnet worden ist, die Aktoren (9) automatisch und autonom die Gesamtanzahl von Aktoren (9) innerhalb des Schließsystems bestimmen und bestimmen, ob die aktuellen Zeitgeberstände, die den Aktoren (9) zugeordnet worden sind, eindeutig sind.

4. Verfahren nach Anspruch 3, **dadurch gekennzeichnet, dass**, falls zwei der Aktoren (9) gleiche aktuelle Zeitgeberstände zugeordnet worden sind, die Schritte a) bis d) wiederholt werden.

5. Verfahren nach Anspruch 1 bis 4, **dadurch gekennzeichnet, dass** die aktuellen Zeitgeberstände, die den Aktoren (9) zugeordnet worden sind, auf ihre eindeutigen Adressen hinweisen.

6. Verfahren nach Anspruch 1 bis 5, **dadurch gekennzeichnet, dass** die eindeutige Adresse jedes Aktors in dem Aktor (9) gespeichert ist.

7. Verfahren nach einem der Ansprüche 1 bis 6, **dadurch gekennzeichnet, dass** die Aktoren (9) in einer Abfolge entsprechend ihren eindeutigen Adressen einer nach dem anderen jeweils eine Datenübertragung über das Datenkommunikationsmedium (13, 13') starten und den anderen Aktoren (9) ihre eindeutige Adresse mitteilen.

8. Verfahren nach einem der Ansprüche 1 bis 7, **dadurch gekennzeichnet, dass** der Initialisierungsvorgang für eine bestimmte Anzahl von Aktoren (9), die durch das Datenkommunikationsmedium (13; 13') miteinander verbunden sind, mittels Aktorindividueller Schalter (33), insbesondere Kippschalter, aktiviert wird.

9. Verfahren nach einem der Ansprüche 1 bis 8, **dadurch gekennzeichnet, dass** zu Beginn der vorgesehenen Verwendung des Schließsystems alle Aktoren (9) so aktiviert werden, dass das mindestens eine Element (3; 5), das durch die Aktoren (9) des Schließsystems bewegt werden soll, in eine vollständig geschlossene Position gebracht wird.

10. Verfahren nach Anspruch 9, **dadurch gekennzeichnet, dass** nachdem das mindestens eine Element (3; 5) in die geschlossene Position gebracht worden ist, alle Aktoren (9) so aktiviert werden, dass das mindestens eine Element (3; 5) in eine vorgegebene geöffnete Referenzposition gebracht wird.

11. Verfahren nach einem der Ansprüche 1 bis 10, **dadurch gekennzeichnet, dass** während der vorgesehenen Verwendung des Schließsystems jeder Aktor (9) seine eigenen Positionsinformationen über das Datenkommunikationsmedium (13; 13') regelmäßig an die anderen Aktoren (9) übermittelt.

12. Verfahren nach einem der Ansprüche 1 bis 11, **dadurch gekennzeichnet, dass** während der vorgesehenen Verwendung des Schließsystems jeder Aktor (9) über das Datenkommunikationsmedium (13; 13') regelmäßig Positionsinformationen von den anderen Aktoren (9) empfängt.

13. Verfahren nach Anspruch 12, **dadurch gekennzeichnet, dass** während der vorgesehenen Verwendung des Schließsystems jeder Aktor (9) Differenzen seiner eigenen Position bezüglich der Positionen der anderen Aktoren (9) bestimmt und einen entsprechenden Korrekturwert zum möglichen Korrigieren seiner eigenen Bewegung bestimmt.

14. Verfahren nach einem der Ansprüche 11 bis 13, **dadurch gekennzeichnet, dass** während der vorgesehenen Verwendung des Schließsystems jeder Aktor (9) seine Bewegungsgeschwindigkeit mittels eines geschlossenen Regelkreises steuert, um eine synchrone Bewegung der Aktoren (9) des Schließsystems bereitzustellen.

15. Verfahren nach einem der Ansprüche 1 bis 14, **dadurch gekennzeichnet, dass** die Positionsinformationen der Aktoren in Datenpaketen enthalten über das Datenkommunikationsmedium (13; 13') zyklisch übermittelt werden, wobei die eindeutige Adresse des Aktors (9), von dem die übermittelten Datenpakete stammen, in den übermittelten Datenpaketen enthalten ist.

16. Verfahren nach einem der Ansprüche 1 bis 15, **dadurch gekennzeichnet, dass** alle Aktoren (9) des Schließsystems angehalten werden, falls während der vorgesehenen Verwendung des Schließsystems
- die Differenz zwischen der Position eines der Aktoren und den Positionen der anderen Aktoren (9) einen vorgegebenen Grenzwert überschreitet und/oder
- die Differenz zwischen der Position eines der Aktoren und den Positionen der anderen Aktoren (9) nach einer Anzahl von Verarbeitungszyklen nicht verringert werden kann.

17. Aktor (9) eines Schließsystems, wobei das Schließsystem den Aktor (9) und mindestens einen weiteren identischen Aktor (9) und ein Datenkommunikationsmedium (13; 13') umfasst, das den Aktor (9) und den mindestens einen weiteren Aktor (9) miteinander verbindet, wobei der Aktor (9) dazu ausgebildet ist, mit mindestens einem Element (3; 5), das bewegt werden soll, insbesondere einer Tür oder einem Fenster, verbunden zu sein, wobei der Aktor (9) Mittel zum Ermöglichen seiner Bewegung synchron bezüglich des mindestens einen weiteren Aktors (9) des Schließsystems umfasst, **dadurch gekennzeichnet, dass** der Aktor (9) Mittel umfasst, um sich selbst während eines Initialisierungsvorgangs, der mindestens einmal vor der vorgesehenen Verwendung des Schließsystems ausgeführt wird, automatisch und autonom eine eindeutige Adresse zuzuordnen, wobei die Mittel zum Zuordnen der eindeutigen Adresse dazu ausgebildet sind,
a) mindestens einen Zeitgeber (27) zu Beginn des Initialisierungsvorgangs zu starten,
b) wenn der erste Aktor (9) des Schließsystems mit einem elektrischen Strom versorgt ist, den aktuellen Zeitgeberstand zu bestimmen und dem ersten Aktor (9) den aktuellen Zeitgeberstand zuzuordnen,
c) wenn ein weiterer Aktor (9) mit einem elektrischen Strom versorgt ist, den aktuellen Zeitgeberstand zu bestimmen und dem weiteren Aktor (9) den aktuellen Zeitgeberstand zuzuordnen, und
d) den Schritt c) zu wiederholen, bis allen Aktoren (9) des Schließsystems ein aktueller Zeitgeberstand zugeordnet worden ist.

18. Schließsystem, das mindestens zwei identische Aktoren (9) und ein Datenkommunikationsmedium (13; 13') umfasst, das die Aktoren (9) miteinander verbindet, wobei die Aktoren (9) dazu ausgebildet sind, mit mindestens einem Element (3; 5), das bewegt werden soll, insbesondere einer Tür oder einem Fenster, verbunden zu sein, wobei die Aktoren (9) des Schließsystems jeweils Mittel zum Ermöglichen einer synchronen Bewegung der mindestens zwei Aktoren (9) des Schließsystems umfassen, **dadurch gekennzeichnet, dass** jeder der Aktoren (9) des Schließsystems Mittel umfasst, um sich selbst während eines Initialisierungsvorgangs, der mindestens einmal vor der vorgesehenen Verwendung des Schließsystems ausgeführt wird, automatisch und autonom eine eindeutige Adresse zuzuordnen, wobei die Mittel zum Zuordnen der eindeutigen Adresse dazu ausgebildet sind,
a) mindestens einen Zeitgeber (27) zu Beginn des Initialisierungsvorgangs zu starten,
b) wenn der erste Aktor (9) des Schließsystems mit einem elektrischen Strom versorgt ist, den aktuellen Zeitgeberstand zu bestimmen und dem ersten Aktor (9) den aktuellen Zeitgeberstand zuzuordnen,
c) wenn ein weiterer Aktor (9) mit einem elektrischen Strom versorgt ist, den aktuellen Zeitgeberstand zu bestimmen und dem weiteren Aktor (9) den aktuellen Zeitgeberstand zuzuordnen, und
d) Schritt c) zu wiederholen, bis allen Aktoren (9) des Schließsystems ein aktueller Zeitgeberstand zugeordnet worden ist.

## Revendications

1. Procédé permettant un déplacement en synchronisme d'au moins deux actionneurs (9) d'un système de fermeture, ces actionneurs (9) étant connectés à au moins un élément (3, 5) à déplacer, en particulier une porte ou une fenêtre, ce procédé comprenant des étapes consistant à :
- donner à chacun des actionneurs (9) une adresse unique, et
au cours d'une utilisation ultérieure prévue du système de fermeture :
- échanger une information entre les actionneurs (9) par l'intermédiaire d'un système de commutation de données (13, 13') réalisant l'interconnexion de ces actionneurs (9), cette information concernant les positions individuelles actuelles des actionneurs (9) au cours de leur fonctionnement dans le cadre l'utilisation prévue, et
- traiter l'information, déterminer des valeurs de correction pour au moins l'un des actionneurs (9) et appliquer ces valeurs de correction à cet actionneur (9) pour permettre aux actionneurs (9) de se déplacer en synchronisme,
**caractérisé en ce que**
les actionneurs (9) s'attribuent eux-mêmes de façon automatique et autonome, leur unique adresse au cours d'une procédure d'initialisation exécutée au moins une fois avant l'utilisation prévue du système de fermeture, les uniques adresses étant attribuées aux actionneurs (9),
a) en démarrant au moins un chronomètre (27) au début de la procédure d'initialisation,
b) lorsque le premier actionneur (9) du système de fermeture est alimenté en courant électrique, en déterminant l'état de comptage actuel du chronomètre et en attribuant cet état de comptage au premier actionneur (9),
c) lorsqu'un autre actionneur (9) est alimenté en courant électrique, en déterminant l'état de comptage actuel du chronomètre et en attribuant cet état de comptage à l'autre actionneur (9), et
d) en répétant l'étape c) jusqu'à ce qu'un état de comptage actuel du chronomètre ait été attribué à tous les actionneurs (9) du système de fermeture.

2. Procédé conforme à la revendication 1,
**caractérisé en ce que**
le chronomètre (27) fournit un nombre aléatoire de préférence situé dans la plage de 0 à 106.

3. Procédé conforme à la revendication 1 ou 2,
**caractérisé en ce qu'**
après qu'un état de comptage actuel du chronomètre ait été attribué à chacun des actionneurs (9), les actionneurs (9) déterminent de façon automatique et autonome leur nombre global dans le système de fermeture et si les états de comptage actuels du chronomètre attribués aux actionneurs (9) sont uniques.

4. Procédé conforme à la revendication 3,
**caractérisé en ce que**
si des états de comptage actuels identiques du chronomètre ont été attribués à deux des actionneurs (9), les étapes a) à d) sont répétées.

5. Procédé conforme aux revendications 1 à 4,
**caractérisé en ce que**
les états de comptage actuels du chronomètre attribués aux actionneurs (9) indiquent leurs adresses uniques.

6. Procédé conforme à la revendication 1 à 5,
**caractérisé en ce que**
l'adresse unique de chaque actionneur est enregistrée dans cet actionneur (9).

7. Procédé conforme à l'une des revendications 1 à 6,
**caractérisé en ce qu'**
en suivant une séquence correspondant à leurs adresses uniques, les actionneurs (9) commencent l'un après l'autre une transmission de données par l'intermédiaire du système de communication de données (13, 13') en communiquant aux autres actionneurs (9) leur adresse unique.

8. Procédé conforme à l'une des revendications 1 à 7,
**caractérisé en ce que**
la procédure d'initialisation est activée pour un certain nombre d'actionneurs (9) interconnectés par le système de communication de données (13, 13') au moyen de commutateurs individuels (33) d'actionneurs, en particulier de micro-interrupteurs.

9. Procédé conforme à l'une des revendications 1 à 8,
**caractérisé en ce qu'**
au début de l'utilisation prévue du système de fermeture tous les actionneurs (9) sont activés de sorte que l'élément (3, 5) devant être déplacé par les actionneurs (9) du système de fermeture soit placé dans une position totalement fermée.

10. Procédé conforme à la revendication 9,
**caractérisé en ce qu'**
après que l'élément (3, 5) ait été placé en position fermée, tous les actionneurs (9) sont activés de sorte que l'élément (3, 5) soit placé dans une position de référence ouverte prédéfinie.

11. Procédé conforme à l'une des revendications 1 à 10,
**caractérisé en ce qu'**
au cours de l'utilisation prévue du système de fermeture, chaque actionneur (9) transmet régulièrement son information de position propre aux autres actionneurs (9) par l'intermédiaire du système de communication de données (13, 13').

12. Procédé conforme à l'une des revendications 1 à 11,
**caractérisé en ce qu'**
au cours de l'utilisation prévue du système de fermeture, chaque actionneur (9) reçoit régulièrement une information de position provenant des autres actionneurs (9) par l'intermédiaire du système de communication de données (13, 13').

13. Procédé conforme à la revendication 12,
**caractérisé en ce qu'**
au cours de l'utilisation prévue du système de fermeture, chaque actionneur (9) détermine les différences entre sa propre position et les positions des autres actionneurs (9) et détermine une valeur de correction respective pour permettre de corriger son propre déplacement.

14. Procédé conforme à l'une des revendications 11 à 13,
**caractérisé en ce qu'**
au cours de l'utilisation prévue du système de fermeture, pour obtenir un déplacement en synchronisme des actionneurs (9) du système de fermeture, chaque actionneur (9) commande sa vitesse de déplacement au moyen d'une commande en boucle fermée.

15. Procédé conforme à l'une des revendications 1 à 14,
**caractérisé en ce que**
l'information de position des actionneurs est transmise de façon cyclique par l'intermédiaire du système de communication de données (13, 13') en étant renfermée dans des paquets de données, l'adresse unique de l'actionneur (9) d'où provient le paquet de données transmises étant renfermée dans les paquets de données transmis.

16. Procédé conforme à l'une des revendications 1 à 15,
**caractérisé en ce que**
tous les actionneurs (9) du système de fermeture sont arrêtés si, au cours de l'utilisation prévue du système de fermeture :
- la différence entre la position de l'un des actionneurs et les positions des autres actionneurs (9) dépasse un seuil prédéfini, et/ou si
- après un nombre de cycles de traitement, la différence entre la position de l'un des actionneurs et les positions des autres actionneurs (9) ne peut pas être réduite.

17. Actionneur (9) d'un système de fermeture, ce système de fermeture comprenant cet actionneur (9) et au moins un autre actionneur identique (9) et un système de communication de données (13, 13') effectuant l'interconnexion de l'actionneur (9) et de l'autre actionneur (9), cet actionneur (9) étant réalisé pour pouvoir être connecté à un autre élément (3, 5) devant être déplacé, en particulier une porte ou une fenêtre, l'actionneur (9) comprenant des moyens pour permettre que son déplacement soit synchrone avec celui de l'autre actionneur (9) du système de fermeture,
**caractérisé en ce que**
l'actionneur (9) comprend des moyens lui permettant de s'attribuer de façon automatique et autonome une adresse unique au cours d'une procédure d'initialisation mise en oeuvre au moins une fois avant l'utilisation prévue du système de fermeture, les moyens permettant d'attribuer l'adresse unique étant réalisés pour :
a) démarrer au moins un chronomètre (27) au début de la procédure d'initialisation,
b) lorsque le premier actionneur (9) du système de fermeture est alimenté en courant électrique, déterminer l'état de comptage actuel du chronomètre et attribuer cet état de comptage actuel au premier actionneur (9),
c) lorsqu'un autre actionneur (9) est alimenté en courant électrique, déterminer l'état de comptage actuel du chronomètre et attribuer cet état de comptage actuel à un autre actionneur (9), et
d) répéter l'étape c) jusqu'à ce que tous les actionneurs (9) du système de fermeture se soient vus attribuer un état de comptage actuel du chronomètre.

18. Système de fermeture comprenant au moins deux actionneurs (9) identiques et un système de communication de données (13, 13') effectuant l'interconnexion de ces actionneurs (9), ces actionneurs (9) étant réalisés pour être connectés à au moins un élément (3, 5) à déplacer, en particulier une porte ou une fenêtre, les actionneurs (9) du système de fermeture comprenant chacun des moyens permettant leur déplacement en synchronisme,
**caractérisé en ce que**
chacun des actionneurs (9) du système de fermeture comprend des moyens lui permettant de s'attribuer, de façon automatique et autonome une adresse unique au cours d'une procédure d'initialisation mise en oeuvre au moins une fois avant l'utilisation prévue du système de fermeture, les moyens permettant l'attribution de l'adresse unique étant réalisés pour :
a) démarrer au moins un chronomètre (27) au début de la procédure d'initialisation,
b) lorsque le premier actionneur (9) du système de fermeture est alimenté en courant électrique, déterminer l'état de comptage actuel du chronomètre et attribuer cet état de comptage actuel au premier actionneur (9),
c) lorsqu'un autre actionneur (9) est alimenté en courant électrique, déterminer l'état de comptage actuel du chronomètre et attribuer cet état de comptage actuel à un autre actionneur (9), et
d) répéter l'étape c) jusqu'à ce que tous les actionneurs (9) du système de fermeture se soient vus attribuer un état de comptage actuel du chronomètre.
